# EUROPÄISCHE PATENTSCHRIFT

(11) **EP 3 227 711 B1**
(45) Veröffentlichungstag und Bekanntmachung des Hinweises auf die Patenterteilung: **04.12.2019**
(21) Anmeldenummer: 15794085.9
(22) Anmeldetag: 21.10.2015
(51) Int. Cl.: G01S 5/20, F41H 11/00, F41G 3/14

(54) **VERFAHREN ZUR LOKALISIERUNG UND BEKÄMPFUNG VON BEDROHUNGEN INSBESONDERE IN ASYMMETRISCHEN BEDROHUNGSLAGEN**
METHOD FOR LOCATING AND COMBATTING THREATS, IN PARTICULAR IN ASYMMETRIC THREAT SITUATIONS
PROCÉDÉ DE LOCALISATION ET DE LUTTE CONTRE DES MENACES, NOTAMMENT DANS DES POSITIONS DE MENACE ASYMÉTRIQUES

(30) Priorität: 05.12.2014 DE 102014017943
(43) Veröffentlichungstag der Anmeldung: 11.10.2017
(73) Patentinhaber: thyssenkrupp Marine Systems GmbH, 24143 Kiel (DE); thyssenkrupp AG, 45143 Essen (DE)
(72) Erfinder: JOST, Paul, 22047 Hamburg (DE)
(74) Vertreter: thyssenkrupp Intellectual Property GmbH
(86) Internationale Anmeldenummer: PCT/EP2015/074307
(87) Internationale Veröffentlichungsnummer: WO 2016/087115

(56) Entgegenhaltungen:
- EP-A1- 0 064 477
- FR-A1- 2 964 467
- GB-A- 548 550
- GB-A- 2 181 238
- US-A- 5 544 129
- US-B1- 6 215 731
- US-B1- 6 903 676
- SCANLON M V: "Helmet-mounted acoustic array for hostile fire detection and localization in an urban environment", PROCEEDINGS OF SPIE, S P I E - INTERNATIONAL SOCIETY FOR OPTICAL ENGINEERING, US, Bd. 6963, 17. März 2008 (2008-03-17), Seiten 69630D-1, XP002589729, ISSN: 0277-786X, DOI: 10.1117/12.784471 ISBN: 978-1-62841-730-2 [gefunden am 2008-04-16]

## Beschreibung

Die Erfindung betrifft ein Verfahren zur Lokalisierung und Bekämpfung von Bedrohungen insbesondere in asymmetrischen Bedrohungslagen.

Militärische Einrichtungen, insbesondere Kriegsschiffe, verfügen über Nahbereichsverteidigungssysteme (Close-In Weapon System, CIWS). Diese werden hauptsächlich gegen anfliegende Flugkörper oder kleine Oberflächenfahrzeuge verwendet. Hierbei kann es sich beispielsweise um eine vollautomatische, radargesteuerte Schnellfeuerkanone mit rotierenden Läufen handeln.

Während bis zum Ende des 20. Jahrhunderts die wesentlichen Bedrohungen für Staaten in einem potentiellen oder realen Angriff durch andere Staaten bestanden ("klassische Bedrohung"), hat sich diese Lage in den letzten Dekaden deutlich verändert. Neben der Bedrohung durch andere Staaten treten zunehmend andere Bedrohungen in den Vordergrund. Weltweit nehmen die asymmetrischen Bedrohungen zu. Hierunter sind beispielsweise Angriffe durch Terroristen oder Überfälle durch Piraten zu verstehen. Hierbei ist zwischen zwei Arten von Angriffen zu unterscheiden. Offensichtliche Angriffe, wie beispielsweise Piratenangriffe auf Handelsschiffe, sind an den sich schnell nähernden Angreifern gut als Bedrohung zu erkennen. Hinzu kommt, dass regelmäßig in solchen Situationen keine Zivilisten anwesend sind. Sehr viel schwieriger wird die Situation, wenn ein Angriff in einer Umgebung erfolgt, in welcher sich unbeteiligte Zivilisten befinden. In einer solchen Situation ist es für die Angreifer oft möglich, sich als Zivilisten zu tarnen und unauffällig zu verhalten, bis diese angreifen. Auch nach einem Angriff bietet diese Situation den Angreifern den Vorteil, dass diese dann mit den im Regelfall flüchtenden Zivilisten unerkannt entkommen können.

Ein typisches Szenario für die asymmetrische Bedrohung ist der Angriff mit einer reaktiven Panzerbüchse, insbesondere einer RPG-7 sowjetisch-russischer Herkunft. Diese Waffe ist sehr verbreitet und daher auch für Terrororganisationen leicht verfügbar. Diese Waffe hat eine Reichweite von 200 m bis 2000 m, wobei im Regelfall eine Annäherung auf wenige Hundert Meter an das Ziel für einen effektiven Einsatz notwendig ist. Diese Waffe ist vergleichsweise klein, sodass diese vor Entdeckung gut verborgen werden kann.

Aus der DE 10 2011086 355 A1 ist ein automatisiertes System zur Verteidigung bekannt. Angreifer werden jedoch insbesondere durch Kurs und Geschwindigkeit als potentielle Angreifer identifiziert und bekämpft. Dieses System versagt, wenn sich potentielle Angreifer unauffällig unter andere zivile Verkehrsteilnehmer mischen und so nicht vor einem Angriff zu identifizieren sind.

Aus der DE 10 2011 011 073 A1 ist ein Verfahren zur passiven Ermittlung der Position eines Objekts bekannt. Hierzu werden optische und aktustische Peildaten verwendet.

Aus der DE 10 2012 003 854 A1 ist ein Verfahren zur automatischen Ortung von Knallereignissen mit Hilfe von handelsüblichen Mobilfunkendgeräten bekannt.

Aus "The Microflown E-Book", http://www.microflown.com/library/books/the-microflown-e-book.htm, Chapter 21: Battlefield acoustics (23pg, 90% ready, April '09), abgerufen am 13.11.2014, ist unter Punkt 21.10 die Detektion von Gewehrfeuer mit Hilfe von akustischen Sensoren beschrieben.

Aus der US 2013/0192451 A1 ist ein Zielerfassungssystem bekannt, welches mittels einer Kamera und einem Mikrofon optische und akustische Informationen erfasst.

Aus der EP 0 064 477 A1 ist ein Verfahren zur Ortung von Knallen mit mindestens zwei Messstellen bekannt.

Aus der Scanlon M V: "Helmet-mounted acoustic array for hostile fire detection and localization in an urban enviroment", Proceedings of SPIE, International Society for Optical Engineering, US, Bd. 6963, 17.03.2008, Seiten 69630D-1, XP002589729, ISSN: 0277-786X, DOI: 10.1117/12.784471. ISBN: 978-1-62841-730-2 ist ein akustisches Ortungssystem bekannt.

Aus der US 5,544,129 A ist ein Verfahren zur Bestimmung des Ursprungs eines Projektils bekannt.

Aus der GB 2 181 238 A ist ein Verfahren zur Positionsbestimmung einer Schallquelle bekannt.

Aus der US 6,215,731 B1 ist ein Waffenortungssystem mit einem akustischen Detektionssystem bekannt.

Aus der GB 548 550 A ist eine Vorrichtung von Waffen bekannt, welche Mikrofone zur Ausrichtung auf den Angreifer verwendet.

Bei den im Stand der Technik offenbarten Verfahren hat sich herausgestellt, dass die Verwendung einer optischen Information problematisch sein kann. Dieses ist vor allem in unübersichtlichen Lagen mit einer Vielzahl unbeteiligter Objekte bzw. Personen der Fall.

Aufgabe der Erfindung ist es, in einem Angriffsfall den Abschusspunkt einer Waffe zu lokalisieren und es somit die Wahrscheinlichkeit zu steigern, einen Angreifer schnell und zuverlässig zu identifizieren. Insbesondere ist es die Aufgabe, Angreifer in einer Gruppe von unbeteiligten Zivilisten zu identifizieren und auf diese Weise Kollateralschäden zu vermeiden oder wenigstens zu minimieren.

Gelöst wird die Aufgabe durch ein Verfahren zur Lokalisierung von Bedrohungen mit den in Anspruch 1 angegebenen Merkmalen. Vorteilhafte Weiterbildungen ergeben sich aus den Unteransprüchen, der nachfolgenden Beschreibung sowie den Zeichnungen.

Das System zur Lokalisierung von Bedrohungen zur Durchführung des Verfahrens weist wenigstens einen ersten akustischen Sensor und einen zweiten akustischen Sensor auf, die der erste akustische Sensor und der zweite akustische Sensor räumlich voneinander beabstandet sind. Der erste akustische Sensor und der zweite akustische Sensor sind zur Erfassung von richtungsabhängigen Informationen ausgebildet. Aus den richtungsabhängigen Informationen des ersten akustischen Sensors und des zweiten akustischen Sensors wird eine Position einer Bedrohung bestimmt. Der erste akustische Sensor und der zweite akustische Sensor sind akustische Sensoren, wobei die akustischen Sensoren zur Erfassung der Herkunftsrichtung des Schalls ausgebildet sind, wobei jeder akustische Sensor zur Erfassung der Herkunftsrichtung des Schalls ausgebildet ist. Solche Sensoren werden auch als richtungsabhängige akustische Sensoren bezeichnet.

Richtungsabhängige akustische Sensoren sind aus dem Stand der Technik bekannt, beispielsweise aus CEAS-AIAA Stockholm 2010, J. Wind, H-E de Bree, Buye Xu, http://www.microflown.com/library/publications/, abgerufen am 13.11.2014, ist die 3D Lokalisierung mittels Schall bekannt, ebenso aus IWK 2009, J. Fricke, H-E de Bree, A. Siegel, http://www.microflown.com/library/publications/far-field-measurements.html, abgerufen am 13.11.2014, sowie aus "The Microflown E-Book", http://www.microflown.com/library/books/the-microflown-e-book.htm, Chapter 21: Battlefield acoustics (23pg, 90% ready, April '09), abgerufen am 13.11.2014.

Vorteil des erfindungsgemäßen Systems ist es, in einem Angriffsfall den Abschusspunkt einer Waffe zu lokalisieren und es somit die Wahrscheinlichkeit zu steigern, einen Angreifer schnell und zuverlässig zu identifizieren. Dieses gilt insbesondere auch in Situationen, wenn der oder die Angreifer in einer größeren Anzahl von unbeteiligten Dritten zunächst nicht erkennbar ist bzw. sind.

Der Abschuss einer Waffe, beispielsweise einer RPG-7, verursacht ein Geräusch, welches sich von üblichen Umgebungsgeräuschen sehr deutlich unterscheidet und vergleichsweise laut ist. Daher ist eine Detektion mit richtungsabhängigen akustischen Sensoren, beispielsweise mit Microflown-Sensoren, sehr einfach möglich. Hinzu kommt, dass die meisten Angriffe aus einer Entfernung erfolgen, welche innerhalb einer Größenordnung zur Größe des angegriffenen Objekts steht. Unter einer Größenordnung wird regelmäßig ein Faktor 10 zwischen den zu vergleichenden Größen verstanden. Beispielsweise haben die Korvetten der Bundesmarine eine Länge von 89 m, die Fregatten der Bundesmarine eine Länge von etwa 140 bis 150 m. Die wahrscheinliste Angriffsdistanz mit einer RPG-7 liegt bei 200 bis 350 m. Wird ein akustischer Sensor beispielsweise in der Nähe des Bugs und ein weiterer akustischer Sensor in der Nähe des Hecks angebracht, so ergibt sich eine sehr präzise Ortung durch eine Kreuzpeilung, da die von den beiden Sensoren erfassten Richtungen sehr unterschiedlich sind.

Die Verwendung von richtungsabhängigen akustischen Sensoren ist besonders vorteilhaft, da hier besonders effizient aus einer Vielzahl der ständig empfangenen Daten, das auslösende Ereignis, beispielsweise der Abschuss einer Waffe, identifiziert werden kann. Kameras und optische Sensoren erzeugen eine vergleichsweise größere Datenmenge, welche ständig ausgewertet werden müsste, was eine enorme Datenverarbeitung erfordert. Auch die üblicher Weise in CIWS eingesetzten Radar-basierenden Systeme versagen in asymmetrischen Bedrohungen, da sich der Radarquerschnitt, die Signatur, eines Terroristen nicht von der eines Zivilisten unterscheiden lässt. Auch kann sich durch Wachpersonal auf Deck nur dann eine Identifikation ergeben, wenn das Wachpersonal bei Abschuss der Waffe direkt in diese Richtung sieht.

Erfindungsgemäß weist das System für das Verfahren wenigstens einen ersten akustischen Sensor und einen zweiten akustischen Sensor auf, wobei der eine erste akustische Sensor einen ersten Überwachungsbereich aufweist und der eine zweite akustische Sensor einen zweiten Überwachungsbereich aufweist. Der erste akustische Sensor und der zweite akustische Sensor sind so angeordnet, dass der erste Überwachungsbereich und der zweite Überwachungsbereich wenigstens teilweise in einem ersten Überlappungsbereich überlappen.

Unter dem Überwachungsbereich eines Sensors wird erfindungsgemäß der Bereich verstanden, aus welchem der Sensor in der Lage ist, Signale zu empfangen. Die Sensoren werden üblicherweise durch einen horziontalen Öffnungswinkel und einen vertikalen Öffnungswinkel sowie eine Detektionsreichweite definiert. Aus diesen Parametern ergibt sich der Überwachungsbereich als der Bereich, aus welchem Signale empfangen werden können.

Die Genauigkeit des Systems lässt sich durch die Verwendung von mehr als zwei akustischen Sensoren verbessern. Hierdurch wird auch die Ausfallwahrscheinlichkeit minimiert, dass durch den ersten Treffer, der durch das System nicht verhindert werden kann, ein akustischer Sensor zerstört oder funktionsunfähig gemacht wird. In diesem Fall überlappen die Überwachungsbereiche aller dieser akustischen Sensoren wenigstens teilweise. Beispielsweise sind drei oder vier akustische Sensoren auf einer Schiffsseite so angeordnet, dass alle diese Schiffsseite überwachen und sich so ein gemeinsamer Überlappunsgbereich ergibt.

Erfindungsgemäß weist das System für das Verfahren wenigstens einen dritten akustischen Sensor und einen vierten akustischen Sensor aufweist, wobei der eine dritte akustische Sensor einen dritten Überwachungsbereich aufweist und der eine vierte akustische Sensor einen vierten Überwachungsbereich aufweist. Der dritte akustische Sensor und der vierte akustische Sensor sind so angeordnet, dass der dritte Überwachungsbereich und der vierte Überwachungsbereich wenigstens teilweise in einem zweiten Überlappungsbereich überlappen.

Besonders bevorzugt sind der erste Überlappungsbereich und der zweite Überlappungsbereich nicht oder nur geringfügig angeordnet.

Erfindungsgemäß sind der erste akustische Sensor und der erste optische Sensor so auf der Backbordseite eines Schiffes angeordnet, dass der erste Überlappungsbereich an der Backbordseite des Schiffes angeordnet ist. Weiter sind der dritte akustische Sensor und der vierte akustische Sensor so auf der Steuerbordseite eines Schiffes angeordnet, dass der zweite Überlappungsbereich an der Steuerbordseite des Schiffes angeordnet ist. Hierdurch wird eine Überwachung auf beiden Schiffsseiten ermöglicht, wobei der erste Überlappungsbereich und der zweite Überlappungsbereich nicht miteinander überlappen.

Des Weiteren ist bevorzugt, dass das System entlang jeder Längsausdehnung des durch das System zu schützenden Objekts wenigstens zwei akustische Sensoren aufweist. Im Falle eines Schiffes sind daher bevorzugt wenigstens zwei akustische Sensoren auf der Steuerbordseite und wenigstens zwei akustische Sensoren auf der Backbordseite angebracht.

In einer weiteren Ausführungsform sind der erste akustische Sensor und der zweite akustische Sensor wenigstens 10 m, bevorzugt wenigstens 25 m, ganz besonders bevorzugt von wenigstens 50 m, voneinander beabstandet. Da durch das System beispielsweise ein Bereich von 10 bis 2.000 m überwacht werden soll, wäre eine zu dichte Anordnung der akustischen Sensoren nicht zielführend, da die Ermittlung der Position über Triangulation erfolgt. Um die Genauigkeit bei der Entfernung nicht zu verlieren, ist daher ein möglichst großer Abstand der akustischen Sensoren zu bevorzugen. Beispielsweise und bevorzugt sind der erste akustische Sensor und der zweite akustische Sensor wenigstens 80% der Ausdehnung des durch das System zu schützenden Objekts, beispielsweise eines Schiffes, voneinander entfernt.

In einer weiteren Ausführungsform weist das System eine Verarbeitungs- und Steuereinheit auf. Besonders bevorzugt ist die Verarbeitungs- und Steuereinheit in ein Combat Information Center (CIC) integriert oder Bestandteil von diesem. Im CIC laufen zum einen die Informationen aller Sensoren zusammen, zum anderen werden von hier auch die Effektoren gesteuert. Vorteilhafter Weise können im CIC die aus den akustischen Sensoren gewonnenen Daten auch mit den Daten weiterer Sensoren abgeglichen und/oder korreliert werden. Viele militärische Einrichtungen, insbesondere Kriegsschiffe weisen Beschädigungssensoren auf. Diese dienen dazu, durch Beschuss entstandene Beschädigungen schnell zu erfassen, damit im Bedarfsfall sofort Maßnahmen zur Schadenseindämmung ergriffen werden können. Durch einen Abgleich der Daten der Beschädigungssensoren mit den Daten aus den akustischen Sensoren können Ereignisse als nicht bedrohlich eingestuft werden, welche nur aus den Daten der akustischen Sensoren als Bedrohung eingestuft werden würden. Klassisches Beispiel hierfür wäre eine Fehlzündung an einem vorbeifahrenden Fahrzeug, welche gegebenenfalls aufgrund der akustischen Signatur mit einem Schuss verwechselbar sein könnte. Ein weiterer Vorteil der Integration in das CIC ist, dass das CIC notwendiger Weise dauerhaft besetzt ist und so auch eine dauerhafte Überwachung des Systems zur Lokalisierung von Bedrohungen gewährleistet ist.

Besonders bevorzugt handelt es sich bei dem wenigstens einen optischen Sensor um einen Sensor für ein bildgebendes Verfahren. Der wenigstens eine optische Sensor kann entweder zur Erfassung im sichtbaren oder im Infraroten oder sowohl im sichtbaren als auch im infraroten Spektralbereich ausgebildet sein. Vorteil im sichtbaren Spektralbereich ist zum einen die gute Verfügbarkeit handelsüblicher Kamerasysteme sowie die gute Darstellbarkeit auch für einen menschlichen Betrachter. Ein weiterer Vorteil ist, dass für normale Kamerasysteme bereits sehr gute Software verfügbar ist, welche ein Erfassen und Verfolgen von Personen (Track and Trace) auch in größeren Ansammlungen von Personen ermöglicht. Vorteil im infraroten Spektralbereich ist die Verwendbarkeit auch unter schlechten Lichtverhältnissen, insbesondere auch bei Nacht.

In einer weiteren Ausführungsform ist die Verarbeitungs- und Steuereinheit zur Ausrichtung des wenigstens einen optischen Sensor auf die Position der Bedrohung ausgebildet. Optische Sensoren, insbesondere Kameras sind regelmäßig schwenkbar montiert und verfügen teilweise über die Möglichkeit mittels Brennweitenanpassung (Zoom), den Bildausschnitt gezielt anzupassen. Durch die akustischen Sensoren wird das auslösende Ereignis detektiert, zum Beispiel der Abschuss einer reaktiven Panzerbüchse. Da die angreifende Person sehr schnell ihren Standort ändern kann, ist es notwendig, diese möglichst schnell über ein anderes Sensorsystem zu erfassen, welches eine kontinuierliche Erfassung auch unter Berücksichtigung von Positionsänderungen erlaubt. Da die richtungsabhängige akustische Sensoren eine sehr zuverlässige Kreuzpeilung erlauben, kann anschließend eine Kamera unmittelbar nach dem Angriff auf die ermittelte Position ausgerichtet werden und so der oder die Angreifer identifiziert und verfolgt werden.

In einem weiteren Aspekt der Erfindung weist ein System zur Abwendung einer Bedrohung ein erfindungsgemäßes System zur Lokalisierung von Bedrohungen und wenigstens einen Effektor auf. Bei dem Effektor kann es sich beispielsweise um eine Rohrwaffe, ein CIWS, ein Flugkörperstartsystem oder um ein nicht letales System handeln. Beispiele für Rohrwaffen auf Schiffen sind Schiffsgeschütze, beispielsweise mit einem Kaliber von 127 mm oder 76 mm, Automatikgeschütze, beispielsweise mit einem Kaliber von 27 mm, sowie ferngesteuerte schwere Maschinengewehre (Remote Controlled Heavy Machine Gun), beispielsweise mit einem Kaliber von 12,7 mm. Beispiele für ein CIWS sind Phalanx Mk-15 von Raytheon, Goalkeeper der Firma Thales Naval Nederland sowie RIM-116 RAM (Rolling Airframe Missile) von Diehl BGT Defence.

Beispiel für ein Flugkörperstartsystem sind das MK 41 Vertical Launching System von Lockheed Martin sowie das MK 26 Guided Missile Launching System von BAE. Beispiele für nicht letale Systeme sind Wasserwerfer, auch als Bestandteil einer Feuerlöschanlage, oder akustische Waffen.

Die Erfindung betrifft ein Verfahren zur Lokalisierung von Bedrohungen unter Verwendung eines erfindungsgemäßen Systems. Das Verfahren umfasst folgende Schritte:
a) Es wird ein akustisches Signal mit einem ersten akustischen Sensor empfangen und die Richtung A erfasst, aus der das empfangene akustische Signal stammt.
b) Es wird ein akustisches Signal mit einem zweiten akustischen Sensor empfangen und die Richtung B erfasst, aus der das empfangene akustische Signal stammt.

Die Schritte a) und b) werden in der Regel durch den Laufzeitunterschied von der Quelle zum Sensor zeitlich versetzt erfolgen, es sei denn, die Schallquelle befindet sich äquidistant zu beiden akustischen Sensoren. Weist das System mehr als zwei akustische Sensoren auf, welche der Schallquelle zugewandt sind, so werden in weiteren Schritten auch von diesen zusätzlichen Sensoren akustische Signale empfangen und die Richtung (C, D, ...) erfasst, aus der das empfangene akustische Signal stammt.
c) Es wird die Position einer Bedrohung bestimmt, in dem diese aus der Richtung A und der Richtung B ermittelt wird. Da die Position der akustischen Sensoren bekannt ist, kann über Kreuzpeilung die Position sehr leicht bestimmt werden.

Erfindungsgemäß weist das Verfahren den zusätzlichen Verfahrensschritt d) auf.
d) Wenigstens ein optischer Sensor wird auf die in Verfahrensschritt c) bestimmte Position einer Bedrohung ausgerichtet.

Durch die Erfassung der Bedrohung mit dem optischen Sensor, kann ein Angreifer identifiziert und verfolgt werden. Vorzugsweise handelt es sich bei dem optischen Sensor um einen Sensor mit einem bildgebenden Verfahren, zum Beispiel einer Kamera.

Erfindungsgemäß weist das Verfahren die folgenden zusätzlichen Verfahrensschritte auf:
e1) Mit dem wenigstens einen optischen Sensor werden Daten erfasst.
e2) Es werden Objekte, beispielsweise Personen oder Fahrzeuge, z.B. Boote, aus den in Verfahrensschritt e1) erfassten Daten ermittelt. Hierzu werden bildverarbeitende Programme eingesetzt.
e3) Es wird unter den in Verfahrensschritt e2) ermittelten Objekten das Objekt ermittelt, welches sich an der in Verfahrensschritt c) bestimmten Position der Bedrohung befindet.

Vorteil dieser zusätzlichen Verfahrensschritte ist die Erfassung und ggf. Dokumentation des Angreifers. War in Verfahrensschritt c) zunächst nur die Position des Angreifers bekannt, so ist der Angreifer in Verfahrensschritt e3) identifiziert. Das in Verfahrensschritt e1) erfasste Material kann einer Strafverfolgungsbehörde als Beweismaterial übergeben werden.

In einer weiteren Ausführungsform werden zusätzlich in Verfahrensschritt e4) alle im Verfahrensschritt e2) ermittelten Objekte außer dem im Verfahrensschritt e3) identifizierten Objekt als unbeteiligt identifiziert. Bei diesen Objekten handelt es sich nach der Erkenntnislage um unbeteiligte Zivilisten. Diese Identifikation soll helfen, bei einer möglichen Reaktion auf den Angriff Kollateralschäden zu vermeiden oder wenigstens zu minimieren.

In einer weiteren Ausführungsform werden dass nach der Durchführung der Verfahrensschritte e1) bis e4) die Verfahrensschritte e1) und e2) kontinuierlich wiederholt und auf diese Weise wird die Bewegung aller Objekte erfasst.

In einem weiteren Aspekt der Erfindung weist ein Verfahren zur Abwendung einer Bedrohung die Verfahrensschritte des erfindungsgemäßen Verfahrens zur Lokalisierung von Bedrohungen auf, Zusätzlich wird in Verfahrensschritt f) wenigstens ein Effektor auf die in Verfahrensschritt c) bestimmte Position einer Bedrohung ausgerichtet. Sollte ein weiterer Angriff zu befürchten oder zu erkennen sein, so kann ohne weitere zeitliche Verzögerung zum Selbstschutz gehandelt werden.

Nachfolgend ist das erfindungsgemäße Verfahren anhand eines in den Zeichnungen dargestellten Ausführungsbeispiels näher erläutert.
- Figur 1:: Schematische Darstellung eines Kriegsschiffs mit einem erfindungsgemäßen System in einer Bedrohungslage
- Figur 2:: Blockdiagramm des Verfahrens zur Lokalisierung von Bedrohungen

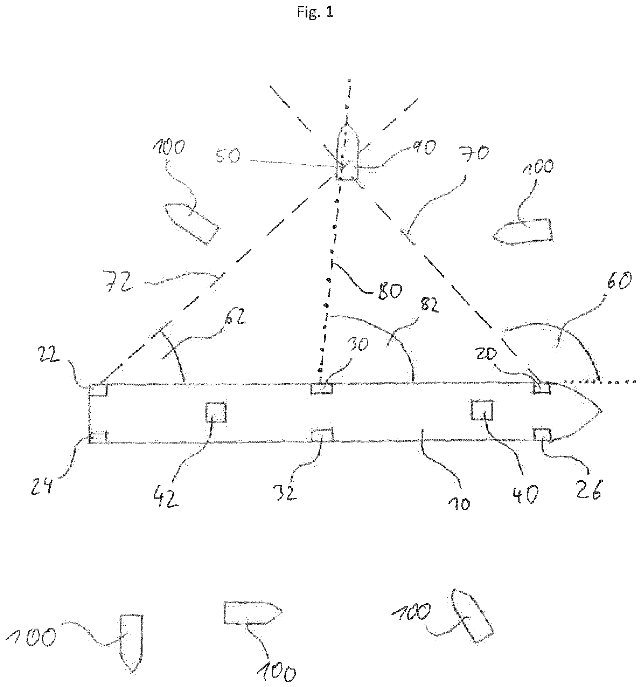

Figur 1 zeigt schematisch die Darstellung eines Kriegsschiffs 10 mit einem erfindungsgemäßen System in einer Bedrohungslage. Das Kriegsschiff 10 verfügt über vier akustische Sensoren 20, 22, 24, 26, wobei ein erster akustischer Sensor 20 backbordseitig am Bug, ein zweiter akustischer Sensor 22 backbordseitig am Heck, ein dritter akustischer Sensor 24 steuerbordseitig am Heck und ein vierter akustischer Sensor 26 steuerbordseitig am Bug befindlich sind. Bei den akustischen Sensoren handelt es sich um richtungsabhängige akustische Sensoren, bevorzugt um Acoustic Vector Sensor der Firma Microflown Avisa. Im vorliegenden Beispiel sind der erste akustische Sensor 20 und der zweite akustische Sensor 22 etwa 128 m voneinander beabstandet, bei einer Schiffslänge von etwa 150 m. Durch die Anordnung des ersten akustischen Sensors 20 und des zweiten akustischen Sensors 22 auf der Backbordseite und des drittem akustischen Sensors 24 und des vierten akustischen Sensors 26 auf der Steuerbordseite kann praktisch die gesamte Umgebung des Kriegsschiffs 10 erfasst werden. Die maximale Beabstandung der akustischen Sensoren 20, 22, 24, 26 führt zu einer schnellen und einfachen Ortung einer Bedrohung.

Neben den akustischen Sensoren 20, 22, 24, 26 weist das Kriegsschiff 10 einen ersten optischen Sensor 30 und einen zweiten optischen Sensor 32 auf. Die optischen Sensoren 30, 32 sind in Form von schwenkbaren Tag-/Nachtsichtkameras ausgeführt. Dieses ermöglicht eine Überwachung des Nächstbereichs des Kriegsschiffs 10 rund um die Uhr. Des Weiteren weist das Kriegsschiff 10 einen ersten Effektor 40, beispielsweise ein 127/64 Lightweight Marinegeschütz der Firma Oto Melara, sowie einen zweiten Effektor 42, beispielsweise ein Remote Controlled Heavy Machine Gun "Hitrole NT" der Firma Oto Melara, auf.

Im Folgenden wird als Bezugsachse für alle betrachteten Winkel die Längsachse des Kriegsschiffes 10 genommen, wobei 0 ° in Fahrtrichtung vor dem Kriegsschiff 10 liegt. In der schematischen Zeichnung verläuft die Bordwand des Kriegsschiffes 10 parallel hierzu, um eine einfache Darstellung zu ermöglichen. Hierdurch können die Winkel auch zur Bordwand betrachtet werden.

Zu einem Zeitpunkt feuert eine Person am Punkt 50 eine RPG-7 ab. Das Geräusch des Abschusses kann von den ersten akustischen Sensor 20 unter dem Winkel A 60 von 132 ° und von dem zweiten akustischen Sensor 22 unter dem Winkel B 62 von 42 ° festgestellt werden. Aus den Daten kann im CIC ermittelt werden, dass der Beschuss vom ersten akustischen Sensor 20 aus der Richtung A 70 und vom zweiten akustischen Sensor 22 aus der Richtung B 72 gekommen ist. Aus der Kreuzpeilung ergibt sich somit die Position des Angreifers. Der erste optische Sensor 30 wird in Richtung C 80 ausgerichtet, indem dieser auf einen Winkel C 82 von 84 ° eingestellt wird. Der Angreifer am Punkt 50 befindet sich von dem ersten optischen Sensor 30 in etwa 63 m Entfernung. Analog können auch Richtung und Entfernung für den ersten Effektor 40 und den weiten Effektor 42 errechnet werden und die Effektoren 40, 42 auf die Bedrohung vom Punkt 50 ausgerichtet werden.

Durch die Analyse der durch den ersten optischen Sensor 30 erfassten Daten kann das Objekt des Angreifers 90 identifiziert werden. Gleichzeitig können alle weiteren unbeteiligten Objekte 100 als unbeteiligt identifiziert werden.

Neben der Identifikation des Objekts des Angreifers 90 kann dieses durch den ersten optischen Sensor 30 überwacht werden. Sollte beispielsweise ein Nachladen des RPG-7 beobachtet werden, kann ein Effektor 40, 42, beispielsweise der zweite Effektor 42 eingesetzt werden, um einen erneuten Beschuss zu verhindern.

Zusätzlich zu den in Figur 1 gezeigten Sensoren kann das Kriegsschiff 10 vorzugsweise weitere Sensoren aufweisen, welche eine Beschädigung und somit einen Angriff detektieren können.

Die in Figur 1 dargestellte Situation ist nur Beispielhaft zu verstehen. Anstelle um ein Kriegsschiff 10 könnte das System auch zum Schutz einer Botschaft, eines Militärlagers in einem Krisengebiet oder einer anderen stark gefährdeten insbesondere militärischen Einrichtung eingesetzt werden. Bei den Objekten 90, 100 würde es sich dann nicht um Schiffe sondern beispielhaft um PKW, LKW und Busse bzw. um Personen handeln.

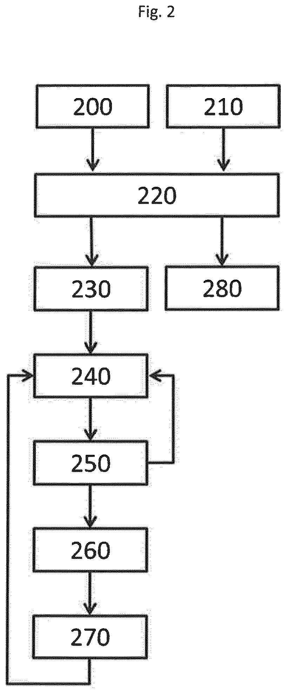

In Figur 2 ist das Verfahren schematisch anhand eines Blockdiagramms dargestellt.

In einem ersten Schritt 200 wird mit dem ersten akustischen Sensor 20 ein akustisches Signal empfangen und die Richtung A 70 des empfangenden akustischen Signals erfasst. In Schritt 210 wird mit dem zweiten akustischen Sensor 22 ein akustisches Signal empfangen und die Richtung B 72 des empfangenden akustischen Signals erfasst. In Schritt 220 wird die Position einer Bedrohung aus der Richtung A 70 und der Richtung B 72 mittels Kreuzpeilung bestimmt. In Schritt 230 wird wenigstens der erste optische Sensor 30 auf die in Schritt 220 bestimmte Position einer Bedrohung ausgerichtet. In Schritt 240 werden Daten von dem ersten optischen Sensor 30 erfasst und in Schritt 250 Objekte aus den in Schritt 240 erfassten Daten ermittelt. In Schritt 260 wird das Objekt des Angreifers 90 bestimmt, welches sich an der in Schritt 220 bestimmten Position einer Bedrohung befindet. Zusätzlich können in Schritt 270 alle weiteren Objekte als weitere unbeteiligte Objekte 100 identifiziert werden. Nach Schritt 270 können die Schritte 240 und 250 kontinuierlich wiederholt werden, um das Objekt des Angreifers 90 zu überwachen und Positionsänderungen des Objekts des Angreifers 90 zu verfolgen. In Schritt 280 wird wenigstens ein Effektor 40, 42 auf die in Schritt 220 bestimmte Position einer Bedrohung ausgerichtet

### Bezugszeichen:

- 10: Kriegsschiff
- 20: erster akustischer Sensor
- 22: zweiter akustischer Sensor
- 24: dritter akustischer Sensor
- 26: vierter akustischer Sensor
- 30: erster optischer Sensor
- 32: zweiter optischer Sensor
- 40: erster Effektor
- 42: zweiter Effektor
- 50: Punkt des Abschusses einer RPG-7
- 60: Winkel A
- 62: Winkel B
- 70: Richtung A
- 72: Richtung B
- 80: Richtung C
- 82: Winkel C
- 90: Objekt des Angreifers
- 100: weitere unbeteiligte Objekte

## Patentansprüche

1. Verfahren zur Lokalisierung von Bedrohungen unter Verwendung eines Systems, wobei das System ein System zur Lokalisierung von Bedrohungen eines Schiffes ist, wobei das System wenigstens einen ersten akustischen Sensoren (20) und einen zweiten akustischen Sensoren (22) aufweist, wobei der erste akustische Sensor (20) und der zweite akustische Sensor (22) räumlich voneinander beabstandet sind, wobei der erste akustische Sensor (20) und der zweite akustische Sensor (22) zur Erfassung von richtungsabhängigen Informationen ausgebildet sind, wobei aus den richtungsabhängigen Informationen des ersten akustischen Sensors (20) und des zweiten akustischen Sensors (22) eine Position einer Bedrohung bestimmt wird, wobei jeder akustische Sensor zur Erfassung der Herkunftsrichtung von Schall ausgebildet ist, wobei der erste akustische Sensor (20) einen ersten Überwachungsbereich aufweist und der zweite akustische Sensor (22) einen zweiten Überwachungsbereich aufweist und wobei der erste akustische Sensor (20) und der zweite akustische Sensor (22) so angeordnet sind, dass der erste Überwachungsbereich und der zweite Überwachungsbereich wenigstens teilweise in einem ersten Überlappungsbereich überlappen, wobei das System wenigstens einen dritten akustischen Sensor (24) und einen vierten akustischen Sensor (26) aufweist, wobei der dritte akustische Sensor (24) einen dritten Überwachungsbereich aufweist und der vierte akustische Sensor (26) einen vierten Überwachungsbereich aufweist und wobei der dritte akustische Sensor (24) und der vierte akustische Sensor (26) so angeordnet sind, dass der dritte Überwachungsbereich und der vierte Überwachungsbereich wenigstens teilweise in einem zweiten Überlappungsbereich überlappen, wobei der erste akustische Sensor und der zweite akustische Sensor auf der Backbordseite des Schiffes angeordnet sind, wobei der erste Überlappungsbereich an der Backbordseite des Schiffes angeordnet ist, wobei der dritte akustische Sensor (24) und der vierte akustische Sensor (26) auf der Steuerbordseite des Schiffes angeordnet sind, wobei der zweite Überlappungsbereich an der Steuerbordseite des Schiffes angeordnet ist, wobei das Verfahren folgende Schritte umfasst:
a) Empfangen eines akustischen Signals mit dem ersten akustischen Sensor (20) und Erfassen der Richtung A (70) des empfangenen akustischen Signals,
b) Empfangen eines weiteren akustischen Signals mit dem zweiten akustischen Sensor (22) und Erfassen der Richtung B (72) des weiteren empfangenen akustischen Signals
c) Bestimmung der Position einer Bedrohung aus der Richtung A (70) und der Richtung B (72),
**dadurch gekennzeichnet, dass**
das System wenigstens einen optischen Sensor (30, 32) aufweist
und das Verfahren weiter die Schritte aufweist:
d) Ausrichten des wenigstens einen optischen Sensors (30, 32) auf die in Verfahrensschritt c) bestimmte Position der Bedrohung,
e1) Erfassen von Daten mit dem wenigstens einen optischen Sensor (30, 32),
e2) Ermitteln von Objekten aus den in Verfahrensschritt e1) erfassten Daten mittels bildverarbeitender Programme,
e3) Ermitteln des Objekts, welches sich an der in Verfahrensschritt c) bestimmten Position der Bedrohung befindet.

2. Verfahren nach Anspruch 1, **dadurch gekennzeichnet, dass** zusätzlich in Verfahrensschritt e4) alle im Verfahrensschritt e2) ermittelten Objekte außer dem im Verfahrensschritt e3) identifizierten Objekt als unbeteiligt identifiziert werden.

3. Verfahren nach Anspruch 2, **dadurch gekennzeichnet, dass** nach der Durchführung der Verfahrensschritte e1) bis e4) die Verfahrensschritte e1) und e2) kontinuierlich wiederholt werden und die Bewegung aller Objekte erfasst wird.

4. Verfahren zur Abwendung einer Bedrohung, welches die Verfahrensschritte des Verfahrens zur Lokalisierung von Bedrohungen nach einem der Ansprüche 1 bis 3 aufweist, **dadurch gekennzeichnet, dass** das System wenigstens einen Effektor (40, 42) aufweist und in Verfahrensschritt f) der wenigstens eine Effektor (40, 42) auf die in Verfahrensschritt c) bestimmte Position der Bedrohung ausgerichtet wird.

5. Verfahren nach einem der vorangehenden Ansprüche, **dadurch gekennzeichnet, dass** der erste akustische Sensor (20) und der zweite akustische Sensor (22) wenigstens 10 m voneinander beabstandet sind.

6. Verfahren nach einem der vorangegangenen Ansprüche, **dadurch gekennzeichnet, dass** das System eine Verarbeitungs- und Steuereinheit aufweist.

7. Verfahren nach Anspruch 6, **dadurch gekennzeichnet, dass** die Verarbeitungs- und Steuereinheit zur Ausrichtung des wenigstens einen optischen Sensors (30, 32) auf die Position der Bedrohung ausgebildet ist.

## Claims

1. Method for locating threats by using a system, the system being a system for locating threats to a ship, the system having at least a first acoustic sensor (20) and a second acoustic sensor (22), the first acoustic sensor (20) and the second acoustic sensor (22) being spaced apart physically from each other, the first acoustic sensor (20) and the second acoustic sensor (22) being designed to detect direction-dependent information, a position of a threat being determined from the direction-dependent information from the first acoustic sensor (20) and the second acoustic sensor (22), each acoustic sensor being designed to detect the direction of origin of sound, the first acoustic sensor (20) having a first monitoring region and the second acoustic sensor (22) having a second monitoring region, and the first acoustic sensor (20) and the second acoustic sensor (22) being arranged such that the first monitoring region and the second monitoring region overlap at least partly in a first overlap region, the system having at least a third acoustic sensor (24) and a fourth acoustic sensor (26), the third acoustic sensor (24) having a third monitoring region and the fourth acoustic sensor (26) having a fourth monitoring region, and the third acoustic sensor (24) and the fourth acoustic sensor (26) being arranged such that the third monitoring region and the fourth monitoring region overlap at least partly in a second overlap region, the first acoustic sensor and the second acoustic sensor being arranged on the port side of the ship, the first overlap region being arranged on the port side of the ship, the third acoustic sensor (24) and the fourth acoustic sensor (26) being arranged on the starboard side of the ship, the second overlap region being arranged on the starboard side of the ship, the method comprising the following steps:
a) receiving an acoustic signal with the first acoustic sensor (20) and
detecting the direction A (70) of the received acoustic signal,
b) receiving a further acoustic signal with the second acoustic sensor (22) and
detecting the direction B (72) of the further received acoustic signal,
c) determining the position of a threat from the direction A (70) and the direction B (72),
**characterized in that**
the system has at least one optical sensor (30, 32), and the method also has the steps: d) aligning the at least one optical sensor (30, 32) with the position of the threat determined in method step c),
e1) detecting data with the at least one optical sensor (30, 32),
e2) determining objects from the data detected in method step e1) by means of image processing programs,
e3) determining the object which is located at the position of the threat determined in method step c) .

2. Method according to Claim 1, **characterized in that**, in addition, in method step e4) all the objects determined in method step e2) are identified as uninvolved, apart from the object identified in method step e3).

3. Method according to Claim 2, **characterized in that** following the performance of method steps e1) to e4), method steps e1) and e2) are repeated continuously and the movement of all objects is detected.

4. Method for averting a threat, which has the method steps of the method for locating threats according to one of Claims 1 to 3, **characterized in that** the system has at least one effector (40, 42) and in method step f) the at least one effector (40, 42) is aligned with the position of the threat determined in method step c).

5. Method according to one of the preceding claims, **characterized in that** the first acoustic sensor (20) and the second acoustic sensor (22) are spaced at least 10 m apart from each other.

6. Method according to one of the preceding claims, **characterized in that** the system has a processing and control unit.

7. Method according to Claim 6, **characterized in that** the processing and control unit is designed to align the at least one optical sensor (30, 32) with the position of the threat.

## Revendications

1. Procédé de localisation de menaces avec utilisation d'un système, dans lequel
le système est un système de localisation de menaces pour un bateau,
dans lequel le système présente au moins un premier capteur acoustique (20) et un deuxième capteur acoustique (22), dans lequel le premier capteur acoustique (20) et le deuxième capteur acoustique (22) sont spatialement espacés l'un de l'autre, dans lequel le premier capteur acoustique (20) et le deuxième capteur acoustique (22) sont configurés pour détecter des informations dépendant de la direction, dans lequel on détermine une position d'une menace à partir des informations dépendant de la direction du premier capteur acoustique (20) et du deuxième capteur acoustique (22), dans lequel chaque capteur acoustique est configuré pour détecter la direction d'origine de son, dans lequel le premier capteur acoustique (20) présente une première zone de surveillance et le deuxième capteur acoustique (22) présente une deuxième zone de surveillance, et dans lequel le premier capteur acoustique (20) et le deuxième capteur acoustique (22) sont disposés de telle manière que la première zone de surveillance et la deuxième zone de surveillance se recouvrent au moins en partie dans une première zone de recouvrement, dans lequel le système présente au moins un troisième capteur acoustique (24) et un quatrième capteur acoustique (26), dans lequel le troisième capteur acoustique (24) présente une troisième zone de surveillance et le quatrième capteur acoustique (26) présente une quatrième zone de surveillance et dans lequel le troisième capteur acoustique (24) et le quatrième capteur acoustique (26) sont disposés de telle manière que la troisième zone de surveillance et la quatrième zone de surveillance se recouvrent au moins en partie dans une deuxième zone de recouvrement, dans lequel le premier capteur acoustique et le deuxième capteur acoustique sont disposés sur le côté bâbord du bateau, dans lequel la première zone de recouvrement est disposée sur le côté bâbord du bateau, dans lequel le troisième capteur acoustique (24) et le quatrième capteur acoustique (26) sont disposés sur le côté tribord du bateau, dans lequel la deuxième zone de recouvrement est disposée sur le côté tribord du bateau,
dans lequel le procédé comprend les étapes suivantes:
a) recevoir un signal acoustique avec le premier capteur acoustique (20) et détecter la direction A (70) du signal acoustique reçu,
b) recevoir un autre signal acoustique avec le deuxième capteur acoustique (22) et détecter la direction B (72) de l'autre signal acoustique reçu,
c) déterminer la position d'une menace à partir de la direction A (70) et de la direction B (72),
**caractérisé en ce que** le système présente au moins un capteur optique (30, 32) et le procédé présente aussi les étapes suivantes:
d) orienter ledit au moins un capteur optique (30, 32) vers la position de la menace déterminée à l'étape de procédé c),
e1) détecter des données avec ledit au moins un capteur optique (30, 32),
e2) déterminer des objets à partir des données détectées à l'étape de procédé e1) au moyen de programmes de traitement d'image,
e3) déterminer l'objet qui se trouve à la position de la menace déterminée à l'étape de procédé c).

2. Procédé selon la revendication 1, **caractérisé en ce que** l'on identifie en plus à l'étape de procédé e4) tous les objets déterminés à l'étape de procédé e2) en dehors de l'objet identifié à l'étape de procédé e3) comme n'étant pas concernés.

3. Procédé selon la revendication 2, **caractérisé en ce qu'**après l'exécution des étapes de procédé e1) à e4), on répète en continu les étapes e1) et e2) et on détecte le mouvement de tous les objets.

4. Procédé pour écarter une menace, qui présente les étapes de procédé du procédé de localisation de menaces selon l'une quelconque des revendications 1 à 3, **caractérisé en ce que** le système présente au moins un effecteur (40, 42) et on oriente à l'étape de procédé f) ledit au moins un effecteur (40, 42) vers la position de la menace déterminée à l'étape de procédé c).

5. Procédé selon l'une quelconque des revendications précédentes, **caractérisé en ce que** le premier capteur acoustique (20) et le deuxième capteur acoustique (22) sont distants l'un de l'autre d'au moins 10 m.

6. Procédé selon l'une quelconque des revendications précédentes, **caractérisé en ce que** le système présente une unité de traitement et de commande.

7. Procédé selon la revendication 6, **caractérisé en ce que** l'unité de traitement et de commande est configurée pour orienter ledit au moins un capteur optique (30, 32) vers la position de la menace.
